# EUROPÄISCHE PATENTSCHRIFT

(11) **EP 2 008 806 B1**
(45) Veröffentlichungstag und Bekanntmachung des Hinweises auf die Patenterteilung: **09.09.2009**
(21) Anmeldenummer: 08007958.5
(22) Anmeldetag: 24.04.2008
(51) Int. Cl.: B32B 3/18, B32B 21/13, B27D 1/06, B32B 21/08

(54) **Dekorplatte sowie deren Herstellungsverfahren**
Decorative plate and manufacturing method
Plaque de décor et son procédé de fabrication

(30) Priorität: 30.06.2007 DE 102007030687
(43) Veröffentlichungstag der Anmeldung: 31.12.2008
(73) Patentinhaber: Moralt Tischlerplatten GmbH & Co. KG, 83646 Bad Tölz (DE)
(72) Erfinder: Feile, Klaus, 83661 Lenggries (DE)
(74) Vertreter: Säger, Manfred

(56) Entgegenhaltungen:
- EP-A- 1 584 461
- DE-A1- 4 030 774
- US-A- 4 428 993
- US-A- 4 536 427
- US-A- 5 439 749
- US-A- 5 738 924

## Beschreibung

Die Erfindung betrifft eine bekannte gattungsgemässe Dekorplatte nach dem Oberbegriff des Hauptanspruchs, nämlich eine solche mit zumindest einer eine Lage aus einem Holzwerkstoff bildenden mittleren Schicht und mit zwei, die Ober- sowie die Unterseite der Dekorplatte bildenden Aussenlage aus einer vorzugsweise dekorativen Kunstharzschicht.

Solche Dekorplatten sind in einer Vielzahl von Ausführungsformen bekannt und haben sich bewährt.

EP-A-1 584 461 offenbart eine Dekorplatte bestehend aus jeweils einer
- oberen Aussenschicht aus Kunstharz,
- mittleren Schicht aus massivem Balsa-Hirnholz mit rechtwinklig zur Oberfläche liegenden Kapillaren
- unteren Aussenschicht aus Kunstharz.

Die Kunstharzschichten sind geleimt und nicht im Direktbeschichtungsverfahren aufgebracht.

US-A-5 439 749 offenbart Direktbeschichtung einer Platte mit Dekor, jedoch kein Balsa-Hirnholz.

US-A-4 536 427 offenbart Balsa-Holz mit einer kontuierbaren Oberlage welche mittels Klebstoff verbunden sind.

Allerdings sind solche gattungsgemässen Dekorplatten mit einer aufgeleimten dekorativen Kunststoffschicht versehen, was zwar den Vorteil mit sich bringt, dass sie wegen des beim Aufleimen nur geringen Pressdrucks aus einem Holzwerkstoff geringerer Dichte hergestellt werden können, wobei man aber dann eine schlechtere Haftung der nur aufgeleimen dekorativen Kunstharzschicht in Kauf nehmen muss. Zugleich sind die Dickentoleranzen wegen der nur geringen Drücke beim Aufleimen unerwünscht gross. Schliesslich kann sich die dekorative Kunstharzschicht bei höheren Umgebungstemperaturen wieder lösen, so dass auch aus diesem Grunde die Einsatzzwecke weiter beschränkt sind.

Würde man hingegen eine möglichst fest haftende, im Direktbeschichtungsverfahren aufzubringende Kunststoffschicht anstreben, so würde dies aufgrund der beim Direktbeschichten notwendigen höheren Drücke einen Holzwerkstoff mit einer Dichte von grösser 400 kg/m³ erfordern und damit zu schwereren, und daher schon wegen ihres Gewichtes nicht universal einsetzbaren Dekorplatten führen, wenngleich mit geringeren Dickentoleranzen.

Der Erfindung liegt daher die Aufgabe zugrunde, eine gattungsgemässe Dekorplatte nach dem Oberbegriff des Hauptanspruchs sowie ein gattungsgemässes Herstellungsverfahren für eine universeller einsetzbare Dekorplatte geringeren Gewichts mit fester haftender Dekorschicht vorzuschlagen.

Diese Aufgabe wird bei einer gattungsgemässen Dekorplatte nach dem Oberbegriff des Hauptanspruchs erfindungsgemäss durch dessen kennzeichnende Merkmale, also dadurch gelöst, dass die mittlere Schicht aus massivem Balsa-Hirnholz besteht, dass dessen Holzfasern beziehungsweise Kapillaren im wesentlichen rechtwinklig zu der Ober- sowie die Unterseite ausgerichtet sind und dass die Kunstharzschicht im Direktbeschichtungsverfahren aufgebracht ist.

Bei der erfindungsgemässen Dekorplatte handelt es sich wegen deren geringen Gewichts der Lage aus dem Holzwerkstoff der mittleren Lage, nämlich massivem Balsa-Hirnholz mit einer Rohdichte von unter 250 kg/m³ um eine Leichtbauplatte, und zwar um die leichteste bekannte Dekorplatte aus Massivholz, die in Dicken von 16 mm bis 98 mm hergestellt werden kann, insbesondere für den Einsatz in Land-, Wasser- und Luftfahrzeugen, im Möbelbau und Innenausbau geeignet sowie aufgrund der Direktbeschichtung besser haftenden Kunststoffschicht weniger beschädigbar und universeller einsetzbar ist. Wenn überdies die Kunstharzschicht einen Duroplasten aufweist, so wird zugleich eine äusserst harte und somit auch unempfindliche die Ober- sowie die Unterseite der Dekorplatte bildende Aussenlage erhalten.

Diese erfindungsgemässe neue Platte wird nach einem gattungsgemässen Verfahren nach dem Oberbegriff des Verfahrenshauptanspruch erfindungsgemäss durch dessen kennzeichndende Merkmale, also dadurch hergestellt, dass als mittlere Schicht ein solches massives Balsa-Hirnholz verwendet wird, dessen Holzfasern beziehungsweise Kapillaren im wesentlichen rechtwinklig zu der Ober- sowie die Unterseite ausgerichtet sind, und dass danach auf die Lage das Kunstharz und ggf. das Papier aufgebracht und dieses bei Druck- sowie Temperatureinwirkung während einer bestimmten Presszeit unter Bildung der Kunstharzschicht direktbeschichtet wird.

Das Direktbeschichten mit Kunstharz erfolgt vorzugsweise in einer Kurztaktpresse, in der das Kunstharz, vorzugsweise ein Duroplast, z.B. Melaminharz, ggf. zusammen mit einem damit getränkten Dekorpapier unter Druck sowie hoher Temperatur kurzzeitig verflüssigt, also gewissermassen "aufgeschmolzen" wird und die verflüssigten Harze in die darunter befindliche Lage eindringen sowie dann zu der Kunstharzschicht aushärten. Trotz der Ausbildung als Leichtbauplatte kann der beim Bilden der dekorativen Kunstharzschicht entstehende Gegendruck durch die mittlere Schicht mit der geringen Rohdichte von unter 250 kg/m³ wegen der Verwendung eines massiven, also gewachsenen Balsa-Hirnholzes als mittlere Schicht sowie zusätzlich der Ausrichtung von dessen Holzfasern beziehungsweise Kapillaren im wesentlichen rechtwinklig zu der Ober- sowie der Unterseite der Dekorplatte kompensiert werden. Der beim Direktbeschichten -durch die Holzfeuchte und durch die einwirkende Temperatur bedingtentstehende Wasserdampf kann aufgrund der im wesentlichen rechtwinkligen Ausrichtung der Holzfasern beziehungsweise Kapillaren zu der Obersowie die Unterseite der Dekorplatte nur in dieser -durch die gerade aufzubringende, direktbeschichtete Kustharzschicht versperrten- Richtung entweichen, weil während der Zeit der Temperatureinwirkung zum Aushärten der Kunstharzschicht diese noch keine geschlossene Schicht gebildet hat und währenddessen für den dabei gebildeten Wasserdampf durchlässig ist.

Wenn in vorteilhafter Ausgestaltung des erfindungsgemässen Verfahrens -vor dem Aufbringen der Kunstharzschicht- auf die beiden Seiten der die Lage aus dem Holzwerkstoff bildenden mittleren Schicht ein Klebstoff aufgebracht und mit je einer Zwischenlage als Dünn-MDF-, Dünn-HDF- oder Dünn-Span-Lage unter Bildung einer Trägerplatte belegt (verleimt) wird, so kann diese ggf. nach dem Konditionieren infolge der Einstellung von Temperatur und Holzfeuchte vor dem Weiterverarbeiten durch Schleifen kalibriert werden, bevor sie mit dem Kunstharz direktbeschichtet wird, wodurch sich eine nur geringe Dickentoleranz der erfindungsgemässen Dekorplatte ergibt. Das Schleifen hat zudem den Vorteil, dass ausserdem allfällige, unter der direktbeschichteten dekorativen Kunstharzschicht befindlicher Schmutz oder durch das Fördern innerhalb der Anlage während des Herstellungsverfahrens bewirkte Kratzer entfernt werden. Wegen des beim Direktbeschichten entstehenden Wasserdampfes ist eine sorgfältige Abstimmung aller Betriebsparameter notwendig. Insbesondere sollte wenig Restfeuchte der mittleren Schicht sowie eine längere Presszeit und eine möglichst geringe Druck- und/oder Temperatureinwirkung eingestellt sowie ein sich langsam vernetzendes duroplastisches Kunststharz eingesetzt werden.

Wenn die Trägerplatte vor dem Schleifen unter Einstellung von Temperatur und Holzfeuchte konditioniert wird, kann dabei schon eine geringere Restfeuchte der mittlern Schicht und damit weniger entstehender Wasserdampf beim Direktbeschichten erreicht werden.

Ein Beispiel der Erfindung wird nachfolgend angegeben:
1. Zur Herstellung einer Trägerplatte werden die Aussenlagen aus Holzwerkstoffen werden in der Leimauftragsmaschine mit 220 g/m² beleimt. Als Leim kommt hier ein Polykondensationsklebstoff, nämlich Harnstoff-Formaldehydharzleim zum Einsatz.
   Die beleimten Aussenlagen werden vor dem Verpressen mit der Mittellage aus massivem Balsa-Hirnholz zusammengelegt und anschliessend der Presse, z.B. Kurztaktpresse zugeführt. Beim Pressvorgang werden folgende Prozessparameter verwendet:
   - Pressdruck: 0,7 N/mm²
   - Presstemperatur: 98 bis 105 °C
   - Presszeit: 1/6 h
   Die noch heissen Trägerplatten werden direkt nach dem Pressvorgang für wenige Minuten in einen Kühlsternwender platziert, um einerseits ein erstes Herunterkühlen und andererseits ein erstes Ausgleichen des Feuchtehaushaltes der Trägerplatten zu gewährleisten. Deren endgültiges Abkühlen sowie das Ausgleichen des Feuchtehaushaltes innerhalb der Trägerplatten erfolgt im Plattenstapel. Dabei werden bis zu 2 m hohe Plattenstapel gebildet, die dann in einen speziell klimatisierten Klimakanal 4 bis 5 Tage zwecks Konditionierung lagern ("reifen"). Dabei stellt sich bei den Trägerplatten eine Holzausgleichsfeuchte von nicht mehr als 9,5% und eine Temperatur von max. 45 °C ein. Das sind die Ausgangswerte für die anschliessenden Verfahrensschritte.
   Durch das Erreichen der Holzausgleichsfeuchte wird gewährleistet, dass sich die Trägerplatten -bedingt durch das natürliche Quell- und Schwundverhaltendann in allen Dimensionen stabilisiert haben, da die Klimaten den späteren Einsatzbedingungen entsprechen. Anschließend werden die Trägerplatten durch Schleien auf ihr Sollmass kalibriert. Dies birgt den Vorteil in sich, dass durch das Ausklimatisieren evtl. entstandene Unebenheiten in den Trägerplatten somit ausgeschliffen werden, wodurch eine ebene Plattenoberfläche garantiert werden kann.
2. Das Aufbringen der direktbeschichteten Kunstharzschicht auf die Trägerplatte erfolgt nach dem Kalibrieren. Als Kunstharzschicht wird mit Melamin als Kunstharz getränktes Dekorpapier eingesetzt, der auf jede Seite unter Einsatz von Druck und Hitze auf die Trägerplatte aufgeschmolzen wird. Für diesen Verfahrensschritt werden folgende Prozessparameter verwendet:
   - Pressdruck: 300 N/cm²
   - Presstemperatur: 170 °C
   - Presszeit: 16 s

Weitere zweckmässige Ausgestaltungen und Weiterbildungen der Erfindung sind in den Unteransprüchen gekennzeichnet.

Ein bevorzugtes Ausführungsbeispiel wird nachfolgend unter Bezugnahme auf die Zeichnung näher erläutert. In dieser zeigt:
- Figur 1: eine erste Ausführungsform der erfindungsgemässen Dekorplatte in teilweise abgebrochener perspektivischer Ansicht und
- Figur 2: eine zweite Ausführungsform der Dekorplatte

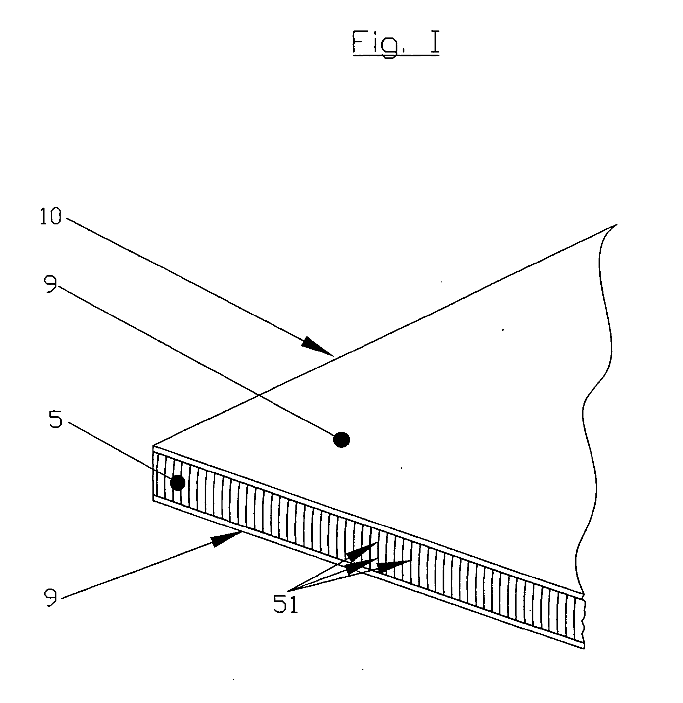

Die in Figur 1 insgesamt mit 10 bezeichnete erste Ausführungsform der Dekorplatte mit einer eine Lage aus einem Holzwerkstoff mit einer Rohdichte von unter 250 kg/m³ bildenden mittleren Schicht 5 weist zwei, die Ober- sowie die Unterseite der Dekorplatte 10 bildenden Aussenlagen aus einer als mit Kunstharz getränktes Dekorpapier ausgebildete, unter Druck sowie hoher Temperatur im Direktbeschichtungsverfahren aufgebachte Kunstharzschicht 9 auf.

Dabei besteht die mittlere Schicht aus gewachsenem massivem Balsa-Hirnholz 5. Dessen Holzfasern bzw. Kapillaren 51 sind im wesentlichen rechtwinklig zu der Ober- sowie die Unterseite ausgerichtet. An diese Schicht aus dem massivem Balsa-Hirnholz 5 schliessen sich die beiderseits vorgesehen, im Direktbeschichtungsverfahren aufgebrachte beiden Kunstharzschichten 9 an.

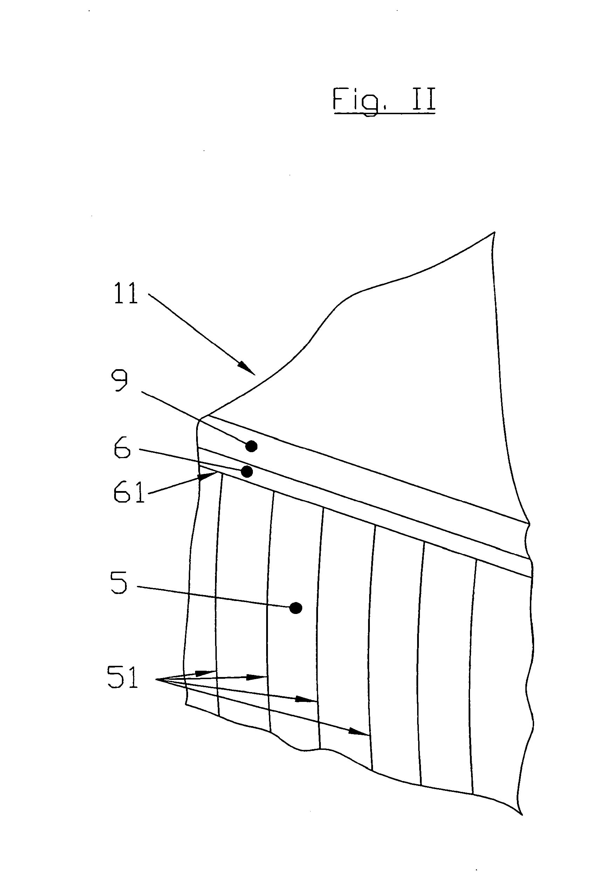

Demgegenüber ist in Figur 2 die zweite Ausführungsform der Dekorplatte 11 dargestellt. Dort wird zunächst auf die beiden Seiten der die Lage aus dem Holzwerkstoff bildenden mittleren Schicht 5 ein Klebstoff 61 aufgebracht und mit je einer Zwischenlage 6 als Dünn-MDF-, Dünn-HDF- oder Dünn-Span-Lage unter Bildung einer Trägerplatte belegt (verleimt). Der Klebstoff 61 kann als Melaminharz-Harnstoff-Formaldehyd- PolykondensationsKlebstoff, Harnstoffharz- Formaldehyd-Polykondensations- Klebstoff, Polyvenylacetat (Weissleim), oder PUR (Polyurethanklebstoff) ausgebildet sein. Die der mittleren Schicht 5 abgewandten zwei Flächen der beiden Zwischenlagen 6 sind dabei zwecks Kaliebrierung vor dem Aufbringen der direktbeschichteten Kunstharzschicht 9 und ggf. nach Konditionieren der Trägerplatte durch deren Einstellung von Temperatur und Holzfeuchte sowie dem Schneiden auf Format geschliffen worden.

Danach wird die Trägerplatte mit der Kunstharzschicht 9, wie auch bei der ersten Ausführungeform direktbeschichtet.

## Patentansprüche

1. Dekorplatte (10) mit zumindest einer eine Lage aus einem Holzwerkstoff bildenden mittleren Schicht (5) und mit zwei, die Ober- sowie die Unterseite der Dekorplatte (10) bildenden Aussenlagen aus einer Kunstharzschicht (9), **dadurch gekennzeichnet, dass** die mittlere Schicht aus massivem Balsa-Hirnholz (5) besteht, dass dessen Holzfasern beziehungsweise Kapillaren (51) im wesentlichen rechtwinklig zu der Ober- sowie die Unterseite ausgerichtet sind und dass die Kunstharzschicht (9) im Direktbeschichtungsverfahren aufgebracht ist.

2. Dekorplatte nach einem der vorangehenden Ansprüche, **dadurch gekennzeichnet, dass** die mittlere Schicht aus massivem Balsa-Hirnholz (5) eine Rohdichte von unter 250 kg/m³ aufweist.

3. Dekorplatte nach einem der vorangehenden Ansprüche, **dadurch gekennzeichnet, dass** die Kunstharzschicht (9) als mit Kunstharz getränktes Dekorpapier ausgebildet ist.

4. Dekorplatte nach einem der vorangehenden Ansprüche, **dadurch gekennzeichnet, dass** die als mit Kunstharz getränktes Dekorpapier ausgebildete Kunstharzschicht (9) unter Druck sowie hoher Temperatur im Direktbeschichtungsverfahren aufgebacht ist.

5. Dekorplatte nach Anspruch 4, **dadurch gekennzeichnet, dass** das Kunstharz als Duroplast, z.B. als Melaminharz ausgebildet ist.

6. Dekorplatte nach einem der vorangehenden Ansprüche, **dadurch gekennzeichnet, dass** zwischen der mittleren Schicht (5) und sowohl der die Ober- als auch der die Unterseite der Dekorplatte (10) bildenden Aussenlage aus einer (dekorativen) Kunstharzschicht (9) je eine Zwischenlage (6) aus einem Holzwerkstoff angeordnet ist.

7. Dekorplatte nach Anspruch 6, **dadurch gekennzeichnet, dass** die mittlere Schicht (5) auf ihren beiden Seiten mit den beiden Zwischenlagen (6) aus dem Holzwerkstoff belegt (verleimt) ist.

8. Dekorplatte nach Anspruch 7, **dadurch gekennzeichnet, dass** der Holzwerkstoff der Zwischenlagen (6) als Dünn-MDF-, Dünn-HDF- oder Dünn-Span-Lage ausgebildet ist.

9. Dekorplatte nach Anspruch 7, **dadurch gekennzeichnet, dass** die mittleren Schicht (5) auf ihren beiden Seiten mit den beiden Zwischenlagen (6) aus dem Holzwerkstoff vermittels eines Klebstoffes (61) belegt ist.

10. Dekorplatte nach Anspruch 9, **dadurch gekennzeichnet, dass** der Klebstoff (61) als Melaminharz-Harnstoff-Formaldehyd- Polykondensations-Klebstoff, Harnstoffharz- Formaldehyd-Polykondensations- Klebstoff, Polyvenylacetat (KPVAC) (Weissleim), oder Polyurethanklebstoff (PUR) ausgebildet ist.

11. Dekorplatte nach Anspruch 9, **dadurch gekennzeichnet, dass** die der mittleren Schicht (5) abgewandten zwei Flächen der beiden Zwischenlagen (6) zwecks Kalibrierung vor dem Aufbringen der direktbeschichteten Kunstharzschicht (9) geschliffen sind.

12. Verfahren zur Herstellung einer Dekorplatte mit zumindest einer mittleren Schicht (5) mit einer Lage aus einem Holzwerkstoff und mit zwei, die Obersowie die Unterseite der Dekorplatte bildenden Aussenlage aus einer (dekorativen) Kunstharzschicht (9), **dadurch gekennzeichnet, dass** als mittlere Schicht ein solches massives Balsa-Hirnholz (5) verwendet wird, dessen Holzfasern beziehungsweise Kapillaren (51) im wesentlichen rechtwinklig zu der Ober- sowie die Unterseite ausgerichtet sind, und dass danach auf die Lage das Kunstharz und ggf. das Papier aufgebracht und dieses bei Druck- sowie Temperatureinwirkung während einer bestimmten Presszeit unter Bildung der Kunstharzschicht (9) direktbeschichtet wird.

13. Verfahren nach einem der vorangehenden Ansprüche, **dadurch gekennzeichnet, dass** vor dem Direktbeschichten der Kunstharzschicht (9) zunächst die darunter befindliche Lage geschliffen und erst danach auf diese das Kunstharz und ggf. das Papier aufgebracht und bei Druck- und/oder Temperatureinwirkung während einer bestimmten Presszeit unter Bildung der Kunstharzschicht (9) direktbeschichtet wird.

14. Verfahren nach einem der vorangehenden Ansprüche, **dadurch gekennzeichnet, dass** das aufgebrachte Kunstharz und ggf. das Papier bei einem Druck von 245 N/cm² bis zu 355 N/cm², vorzugsweise 300 N/cm², einer Temperatur von bis zu 200 °C und einer Presszeit von bis zu 60 s unter Bildung der Kunstharzschicht (9) gepresst wird.

15. Verfahren nach Anspruch 14, **dadurch gekennzeichnet, dass** als Kunstharz ein duroplastisch aushärtender Kunststoff verwendet wird.

16. Verfahren nach einem der vorangehenden Ansprüche, **dadurch gekennzeichnet, dass** vor dem Schleifen auf die beiden Seiten der die Lage aus dem Holzwerkstoff bildenden mittleren Schicht (5) ein Klebstoff aufgebracht und mit je einer Zwischenlage (6) als Dünn-MDF-, Dünn-HDF- oder Dünn-Span-Lage belegt unter Bildung einer Trägerplatte (verleimt) wird.

17. Verfahren nach Anspruch 16, **dadurch gekennzeichnet, dass** die Trägerplatte vor dem Schleifen unter Einstellung von Temperatur und Holzfeuchte konditioniert wird.

18. Verfahren nach Anspruch 17, **dadurch gekennzeichnet, dass** die Trägerplatte nach dem Konditionieren auf Format geschnitten wird.

19. Verfahren nach Anspruch 18, **dadurch gekennzeichnet, dass** das Schleifen der Trägerplatte nach deren Formatieren erfolgt.

20. Verfahren nach Anspruch 19, **dadurch gekennzeichnet, dass** die Trägerplatte nach dem Schleifen mit dem Kunstharz direktbeschichtet wird.

21. Verfahren nach Anspruch 17, **dadurch gekennzeichnet, dass** die Trägerplatte unter Einstellung einer Temperatur von 45 °C konditioniert wird.

22. Verfahren nach Anspruch 17, **dadurch gekennzeichnet, dass** die Trägerplatte unter Einstellung einer Holzausgleichsfeuchte von 9,5 % konditioniert wird.

23. Verfahren nach Anspruch 17, **dadurch gekennzeichnet, dass** die Trägerplatte zwischen zwei und fünf, vorzugsweise drei bis vier Tage lang konditioniert wird.

## Claims

1. A decorative panel (10) with at least one middle layer (5) forming a layer made of a timber material and with two outer layers made of a synthetic resin layer (9) forming the upper and lower surface of the decorative panel (10),
**characterised in that**
the middle layer consists of solid cross-grained balsa wood (5), that its wood fibres or capillaries (51) are aligned substantially at right angles to the upper and lower surface and that the synthetic resin layer (9) is applied using the direct coating method.

2. The decorative panel according to any one of the preceding claims,
**characterised in that**
the middle layer made of solid cross-grained balsa wood (5) provides an apparent density below 250 kg/m³.

3. The decorative panel according to any one of the preceding claims,
**characterised in that**
the synthetic resin layer (9) is formed as a decorative paper impregnated with synthetic resin.

4. The decorative panel according to any one of the preceding claims,
**characterised in that**
the synthetic resin layer (9) formed as decorative paper impregnated with synthetic resin is applied under pressure and high-temperature using the direct coating method.

5. The decorative panel according to claim 4,
**characterised in that** the synthetic resin is formed as a thermosetting resin, for example, as melamine resin.

6. The decorative panel according to any one of the preceding claims,
**characterised in that**
an intermediate layer (6) made of a timber material is disposed in each case between the middle layer (5) and both the outer layer made of (decorative) synthetic resin layer (9) forming the upper surface and the lower surface of the decorative panel (10).

7. The decorative panel according to claim 6,
**characterised in that**
the middle layer (5) is covered (glued) on both of its sides with the two intermediate layers (6) made of the timber material.

8. The decorative panel according to claim 7,
**characterised in that**
the timber material of the intermediate layers (6) is formed as thin MDF, thin HDF or a thin plywood layer.

9. The decorative panel according to claim 7,
**characterised in that**
the middle layer (5) is covered on both of its sides with the two intermediate layers (6) made of the timber material by means of an adhesive (61).

10. The decorative panel according to claim 9,
**characterised in that**
the adhesive (61) is formed as a melamine-ureaformaldehyde poly-condensation adhesive, urea-resin formaldehyde poly-condensation adhesive, polyvenyl[?] acetate (KPVAC) (white glue), or polyurethane adhesive (PUR).

11. The decorative panel according to claim 9,
**characterised in that**,
for the purpose of calibration, the two surfaces of the two intermediate layers (6) facing away from the middle layer (5) are ground before the application of the directly-coated synthetic resin layer (9).

12. A method for the manufacture of a decorative panel with at least one middle layer (5) comprising a layer made of a timber material and with two outer layers made of a (decorative) synthetic resin layer (9) forming the upper surface and the lower surface of the decorative panel,
**characterised in that**
as the middle layer, such a solid cross-grained balsa wood (5) is used, of which the wood fibres or capillaries (51) are aligned substantially at right angles to the upper and the lower surface, and that afterwards, the synthetic resin and optionally the paper are applied to the layer, and the latter is directly coated subjected to pressure and the effect of temperature during a given pressing time thereby forming the synthetic resin layer (9).

13. The method according to any one of the preceding claims,
**characterised in that**,
before the direct coating of the synthetic resin layer (9), the layer disposed beneath it is initially ground, and only after this, the synthetic resin and optionally the paper is applied to the latter and directly coated under pressure and/or subjected to the influence of temperature during a given pressing time thereby forming the synthetic resin layer (9).

14. The method according to any one of the preceding claims,
**characterised in that**
the applied synthetic resin and optionally the paper is pressed with a pressure of 245 N/cm² to 355 N/m², preferably 300 N/cm², a temperature of up to 200°C and a pressing time of up to 60 seconds thereby forming the synthetic resin layer (9).

15. The method according to claim 14,
**characterised in that**
a thermosetting resin is used as the synthetic resin.

16. The method according to any one of the preceding claims,
**characterised in that,**
before the grinding of the middle layer (5) forming the layer made of the timber material, an adhesive is applied and, in each case, covered (glued) with an intermediate layer (6) of thin MDF, thin HDF or a thin plywood layer thereby forming a carrier panel.

17. The method according to claim 16,
**characterised in that**
the carrier panel is conditioned before grinding by setting the temperature and timber moisture content.

18. The method according to claim 17,
**characterised in that**
the carrier panel is cut to format after conditioning.

19. Method according to claim 18,
**characterised in that**
the grinding of the carrier panel is implemented after it has been formatted.

20. Method according to claim 19,
**characterised in that**
the carrier panel is directly coated with the synthetic resin after grinding.

21. The method according to claim 17,
**characterised in that**
the carrier panel is conditioned by setting a temperature of 45°C.

22. The method according to claim 17,
**characterised in that**
the carrier panel is conditioned by setting a timber equilibrium moisture content of 9.5%.

23. The method according to claim 17,
**characterised in that**
the carrier panel is conditioned for between two and five days, preferably three to four days.

## Revendications

1. Panneau de décor (10) comportant au moins une couche centrale (5) formant une plaque en matériau à base de bois, et comportant deux plaques extérieures, formant la face supérieure et la face inférieure du panneau de décor (10) et réalisées dans une couche de résine synthétique (9), **caractérisé en ce que** la couche centrale est réalisée en balsa massif (5) configuré en bois de bout, **en ce que** les fibres de bois ou capillaires (51) de celui-ci sont orientées sensiblement perpendiculairement à la face supérieure et à la face inférieure, et **en ce que** la couche de résine synthétique (9) est appliquée par le procédé à couchage direct.

2. Panneau de décor selon l'une des revendications précédentes, **caractérisé en ce que** la couche centrale en balsa massif (5) configuré en bois de bout possède une masse volumique apparente inférieure à 250 kg/m³.

3. Panneau de décor selon l'une quelconque des revendications précédentes, **caractérisé en ce que** la couche de résine synthétique (9) est réalisée sous forme de papier décor imprégné de résines synthétiques.

4. Panneau de décor selon l'une quelconque des revendications précédentes, **caractérisé en ce que** la couche de résine synthétique (9) réalisée sous forme de papier décor imprégné de résines synthétiques est appliquée sous pression et à température élevée dans le procédé à couchage direct.

5. Panneau de décor selon la revendication 4, **caractérisé en ce que** la résine synthétique est réalisée sous forme de résine thermodurcissable, telle que la résine de mélamine.

6. Panneau de décor selon l'une quelconque des revendications précédentes, **caractérisé en ce que** respectivement une plaque intermédiaire (6), réalisée en matériau à base de bois, est disposée entre la couche centrale (5) et la plaque extérieure, formant tant la face supérieure que la face inférieure du panneau de décor (10) et réalisée dans une couche de résine synthétique (9) (décorative).

7. Panneau de décor selon la revendication 6, **caractérisé en ce que** la couche centrale (5) est revêtue (par collage) sur ses deux faces avec les deux plaques intermédiaires (6) réalisées dans un matériau à base de bois.

8. Panneau de décor selon la revendication 7, **caractérisé en ce que** le matériau à base de bois des plaques intermédiaires (6) est réalisé sous la forme d'un panneau mince en fibres moyenne densité (MDF), d'un panneau mince en fibres haute densité (HDF) ou d'un panneau mince en copeaux pressés.

9. Panneau de décor selon la revendication 7, **caractérisé en ce que** la couche centrale (5) est revêtue sur ses deux faces, au moyen d'une colle (61), avec les deux plaques intermédiaires (6) en matériau à base de bois.

10. Panneau de décor selon la revendication 9, **caractérisé en ce que** la colle (61) est réalisée sous forme de colle de polycondensation aminoplaste à base de mélamine, de colle de polycondensation aminoplaste, de colle de polyacétate de vinyle (KPVAC) (colle de caséine) ou colle de polyuréthanne.

11. Panneau de décor selon la revendication 9, **caractérisé en ce que** les deux faces, détournées de la couche centrale (5), des deux plaques intermédiaires (6) sont polies, en vue du calibrage, avant l'application de la couche de résine synthétique (9) déposée par couchage direct.

12. Procédé de réalisation d'un panneau de décor comportant au moins couche centrale (5) avec une plaque en matériau à base de bois, et comportant deux plaques extérieures, formant la face supérieure et la face inférieure du panneau de décor et réalisées dans une couche de résine synthétique (9), **caractérisé en ce que** pour former la couche centrale on utilise du balsa massif (5) configuré en bois de bout, dont les fibres de bois ou capillaires (51) sont orientées sensiblement perpendiculairement à la face supérieure et à la face inférieure, et **en ce que**, ensuite, la résine synthétique et, le cas échéant, le papier sont déposés sur la couche et cela est effectué par couchage direct moyennant l'application d'une pression et d'une température pendant une durée de pressage déterminée pour la formation de la couche de résine synthétique (9).

13. Procédé selon l'une quelconque des revendications précédentes, **caractérisé en ce que,** avant le couchage direct de la couche de résine synthétique (9), la plaque située en dessous de celle-ci est d'abord polie et, ensuite seulement, la résine synthétique et, le cas échéant, le papier sont déposés sur celle-ci et le couchage direct est effectué moyennant l'application d'une pression et d'une température pendant une durée de pressage déterminée pour la formation de la couche de résine synthétique (9).

14. Procédé selon l'une quelconque des revendications précédentes, **caractérisé en ce que** la résine synthétique et, le cas échéant, le papier déposés sont pressés avec une pression de 245 N/cm² à 355 N/cm², de préférence 300 N/cm², une température de 200°C maximum et une durée de pressage de 60 s maximum moyennant la formation de la couche de résine synthétique (9).

15. Procédé selon la revendication 14,
**caractérisé en ce que** la résine synthétique utilisée est une matière plastique thermodurcissable.

16. Procédé selon l'une quelconque des revendications précédentes, **caractérisé en ce que,** avant le polissage, sur les deux faces de la couche centrale (5), formant la plaque en matériau à base de bois, est appliquée une colle et sur celle-ci est déposée (par collage) respectivement une plaque intermédiaire (6) sous la forme d'un panneau mince en fibres moyenne densité (MDF), d'un panneau mince en fibres haute densité (HDF) ou d'un panneau mince en copeaux pressés, en vue de la formation d'une plaque de support.

17. Procédé selon la revendication 16,
**caractérisé en ce que** la plaque de support est conditionnée avant le polissage moyennant le réglage de la température et de l'humidité du bois.

18. Procédé selon la revendication 17,
**caractérisé en ce que** la plaque de support est découpée au format après le conditionnement.

19. Procédé selon la revendication 18,
**caractérisé en ce que** le polissage de la plaque de support est effectué après la découpe au format de celle-ci.

20. Procédé selon la revendication 19,
**caractérisé en ce que** la plaque de support, après le polissage, est revêtue par couchage direct de la résine synthétique.

21. Procédé selon la revendication 17,
**caractérisé en ce que** la plaque de support est conditionnée moyennant le réglage d'une température de 45°C.

22. Procédé selon la revendication 17,
**caractérisé en ce que** la plaque de support est conditionnée moyennant le réglage d'une humidité d'équilibre du bois de 9,5 %.

23. Procédé selon la revendication 17,
**caractérisé en ce que** la plaque de support est conditionnée pendant une durée entre deux et cinq, de préférence trois à quatre jours.
